# EUROPÄISCHE PATENTSCHRIFT

(11) **EP 3 272 661 B1**
(45) Veröffentlichungstag und Bekanntmachung des Hinweises auf die Patenterteilung: **12.09.2018**
(21) Anmeldenummer: 16180751.6
(22) Anmeldetag: 22.07.2016
(51) Int. Cl.: B65B 39/00

(54) **PRODUKTAUSGABEVORRICHTUNG UND VERFAHREN ZUR BETÄTIGEN DERSELBEN**
PRODUCT DISPENSER AND CORRESPONDING METHOD OF ACTUATION
DISPOSITIF DE SORTIE DE PRODUIT ET PROCÉDÉ POUR SON OPÉRATION

(43) Veröffentlichungstag der Anmeldung: 24.01.2018
(73) Patentinhaber: Multipond Wägetechnik GmbH, 84478 Waldkraiburg (DE)
(72) Erfinder: SICKINGER, Günther, 84539 Ampfing (DE); SCHMIDHUBER, Joseph, 84559 Kraiburg (DE); PETERS, Andreas, 84544 Aschau am Inn (DE); PROFE, Felix, 84543 Winhöring (DE)
(74) Vertreter: Prüfer & Partner mbB Patentanwälte · Rechtsanwälte

(56) Entgegenhaltungen:
- EP-B1- 0 979 393
- GB-A- 232 354
- JP-U- S60 148 937

## Beschreibung

Die vorliegende Erfindung bezieht sich auf eine Produktausgabevorrichtung für ein Produktbereitstellungssystem.

Bei der Befüllung von leeren Verpackungen, wie beispielsweise Beuteln, Bechern, Dosen oder ähnlichem, arbeiten moderne Verpackungsmaschinen mit einer so hohen Geschwindigkeit, dass es kaum noch möglich ist, die zu befüllenden Verpackungsbehälter in der kurzen zur Verfügung stehenden Zeit zuverlässig mit bestimmten Produktmengen, die zum Beispiel durch Wiegen, Zählen, zeitgesteuertem Dosieren oder ähnlichem erhalten worden sind, zu befüllen. Um Produktmengen, welche in die Verpackungsbehälter zu füllen sind, bereitzustellen, wird zum Beispiel eine entsprechende Anzahl herkömmlicher Abfüllwaagen oder eine Kombinationswaage verwendet. In beiden Fällen müssen die aus räumlich getrennten Wägebehältern der herkömmlichen Wagen oder der Kombinationswaage abgeworfenen Produktmengen der Einfüllstelle der Verpackungsmaschine zugeführt werden.

JP S60 148937 offenbart eine Anordnung zur Produktausgabe mit zwei Kammern und jeweiligen Klappen.

EP 0 979 393 B1 beschreibt eine Produktausgabevorrichtung mit bewegbaren Auffangbehältern. Mit diesem System werden aus einem Wägesystem gewogene Produktmengen an eine erste und zweite Produktzuführvorrichtung abgegeben. Unter diesen sind ein entsprechender erster Auffangbehälter und ein entsprechender zweiter Auffangbehälter positioniert, welche jeweils mit Verschlussklappen versehen sind. Unter den Auffangbehältern ist eine Produktempfangsvorrichtung vorgesehen, welche in eine entsprechende Verpackungsmaschine mündet. Hierbei kann das Wägesystem gewogene Produktmengen in die erste oder die zweite Produktzuführvorrichtung ausgeben. Diese Produktmengen werden dann von den Auffangbehältern mit geschlossenem Verschluss so aufgefangen, dass die durch die Sammeltrichterwand auseinandergezogene Produktmengen durch einen sich verjüngenden Innenraum wieder in eine kompakte Form gesammelt werden. Die Auffangbehälter sind derart angeordnet, dass die Auslassöffnung eines entsprechenden Sammeltrichters in Richtung der Gravitationsbeschleunigung immer innerhalb des Umfangs der oberen Öffnung des Auffangbehälters positioniert ist, so dass sie sowohl in ihrer Ausgabestellung über der Produktempfangsvorrichtung als auch in einer anderen Stellung eine gewogene Produktmenge, welche vom Wägesystem ausgegeben wird, empfangen können. In einer entsprechenden Stellung sind in den Auffangbehältern enthaltene Produktmengen durch Öffnen der jeweiligen Verschlussklappen in die Produktempfangsvorrichtung abwerfbar.

EP 1 184 648 B1 offenbart eine ähnliche Produktausgabevorrichtung, welche zusätzlich mit einer Vorrichtung zum Öffnen der Verschlussklappen versehen ist. Hierbei ist das Öffnen und Schließen der Verschlussklappen abhängig von der Stellung der Auffangbehälter (diese werden um eine Achse geschwenkt) variabel auswählbar. So kann sichergestellt werden, dass sich die Verschlussklappen der Auffangbehälter je nach Situation öffnen oder schließen - werden Produkte aus der Produktzuführvorrichtung abgeworfen, sind die Verschlussklappen jeweils geschlossen, wenn sich jedoch einer der Auffangbehälter in der Abwurfstellung über der Produktempfangsvorrichtung befindet, können die Klappen geöffnet werden, so dass das Produkt in kompakter Weise abgeworfen werden kann.

Aus solchen Systemen ergeben sich jedoch zwei grundlegende Probleme:
Zum einen muss abgewartet werden, bis eine komplette Produktmenge einen der Auffangbehälter verlassen hat. Erst dann kann die Schwenkbewegung der Auffangbehälter beginnen. Andernfalls würde das Produkt von den Verschlussklappen verschleppt werden. Eine Übergabe der kompletten Produktportion an die Produktempfangsvorrichtung wäre dann nicht mehr gewährleistet. Durch Kollision mit den Wänden der Produktempfangsvorrichtung wird das Produkt zudem durch Reibung verlangsamt.
Eine Produktmenge wird dadurch auseinandergezogen. Deshalb ist eine klare Trennung zur nächsten Portion nur noch bei größeren Zeitabständen zwischen den einzelnen Portionen möglich. Somit ist die Leistung einer solchen Anlage gering.

Weiterhin ergibt sich ein Problem, da der Schwenkvorgang der Auffangbehälter erst nach Schließen der Verschlussklappen der Auffangbehälter beginnen kann. Daher darf dieser Schwenkvorgang nur eine möglichst kurze Zeit in Anspruch nehmen, um eine entsprechende erwünschte -wenn auch geringe- Leistung der Anlage realisieren zu können. Ein Schwenken der Auffangbehälter muss daher mit sehr hohen Geschwindigkeiten vorgenommen werden, weswegen sowohl beim Beginn als auch zum Ende der Schwenkbewegung hohe Beschleunigungen auftreten können. Ein entsprechender Antrieb für das Schwenken der Auffangbehälter muss entsprechend ausgelegt sein, was ebenfalls starke Rückwirkungen auf das System haben kann, beispielsweise in Form von Unruhe, Schwankungen und Stößen. Wegen der hohen dynamischen Belastungen, die hierbei auftreten, benötigt das System eine entsprechend hohe Steifigkeit. Dies führt zwangsweise auch zu massiven schweren Bauteilen.

Es ist daher Aufgabe der vorliegenden Erfindung, eine Produktausgabevorrichtung zur Verfügung zu stellen, welche die oben genannten Probleme löst.

Diese Aufgabe wird durch eine Produktausgabevorrichtung gemäß Anspruch 1 sowie durch ein Verfahren gemäß Anspruch 14 gelöst. Weitere vorteilhafte Ausgestaltungen der Erfindung sind Gegenstand der abhängigen Ansprüche.
Die Erfindung beinhaltet eine Produktausgabevorrichtung, aufweisend eine erste Produktzuführvorrichtung mit einem zugehörigen ersten Auffangbehälter und einer zweiten Produktzuführvorrichtung mit einem zweiten zugehörigen Auffangbehälter. Der erste und der zweite Auffangbehälter sind mechanisch miteinander gekoppelt und weisen an ihren Unterseiten jeweils ein Paar Verschlussklappen auf. Die Auffangbehälter können die bereitgestellten Produktmengen an eine Produktempfangsvorrichtung mit einem vorgegebenen Öffnungsquerschnitt ausgeben. Hierbei besitzt jeder der beiden Auffangbehälter zum Ausgeben einer bereitgestellten Produktmenge jeweils eine Ausgabestellung. Die Auffangbehälter selber sind um eine Achse schwenkbar und somit in Ausgabestellungen bringbar. Jedoch ist die Öffnungs- bzw. Schließrichtung der Verschlussklappen im Unterschied zum Stand der Technik so konfiguriert, dass diese durch ihre Öffnungsbewegung aus dem Schwenkpfad der Auffangbehälter bewegbar sind ohne beim Schwenken mit dem Produkt zu kollidieren. Vorzugsweise ist die Öffnungs- bzw. Schließrichtung der Verschlussklappen senkrecht zur Schwenkrichtung der Auffangbehälter. Zum Realisieren der Schwenkbewegung sowie der Öffnungs- und Schließbewegung der Verschlussklappen ist ein zentraler Antrieb mit einem Schwenkantrieb sowie einem Klappenantrieb mechanisch gekoppelt, und eine Steuerungsvorrichtung ist vorgesehen, die derart konfiguriert ist, dass das Schwenken von der Ausgabestellung eines Auffangbehälters in die Ausgabestellung des jeweils anderen Auffangbehälters beginnt, bevor sich die Verschlussklappen des seine Ausgabestellung verlassenden Auffangbehälters geschlossen haben.

Die erfindungsgemäße Lösung des Problems hat mehrere Vorteile.

Erstens kann dadurch mit dem Schwenken der Auffangbehälter bereits begonnen werden, wenn die Verschlussklappen des jeweiligen Behälters noch offenstehen, da das Produkt, welches sich zwischen den Verschlussklappen befindet, im offenen Raum zwischen den Verschlussklappen ungehindert seinen Fallweg fortsetzen kann. Es erfolgt keine Berührung mit den Verschlussklappen, somit auch keine Reibung und keine Verschleppung des Produkts. Daher ist eine höhere Ausgabeleistung der Produktausgabevorrichtung realisierbar.

Ferner erlaubt es die vorliegende Erfindung, dass die Schwenkbewegung der Auffangbehälter langsamer ausgeführt werden kann - verglichen mit dem Stand der Technik bei gleicher Taktleistung. Somit sind kleinere Beschleunigungen ausreichend, was zu einer geringeren benötigten Antriebsleistung des zentralen Antriebs führt. Somit hat der Antrieb einen geringeren Einfluss auf das restliche System. Starke Rückwirkungen in Form von Unruhe, Schwankungen und Stößen können somit vermieden werden. Aufgrund der kleineren Beschleunigungen hat man niedrigere dynamische Belastungen. Daher ist eine geringere Steifigkeit des Systems nötig, weshalb die Bauteile auch leichter ausgeführt werden können.

Ferner ist ein System gemäß der vorliegenden Erfindung gegenüber dem Stand der Technik leiser. Dies wird wegen besagter geringerer Beschleunigungen, welche sich durch einen früheren Beginn der Schwenkbewegung (bevor sich die Verschlussklappen der Auffangbehälter schließen) ergeben, ermöglicht.

Weiterhin tragen vorzugsweise vorgespannte Torsionsfedern, die die Verschlussklappen wieder verschließen, dazu bei, dass eine beliebige Einstellbarkeit vorhanden ist, je nach Größe und Abmessungen der Verschlussklappen und/oder des Produkts. Im Vergleich zu Zugfedern ist diese Lösung hygienischer, da sie leichter reinigbar und besser geschützt von anderen mechanischen Einflüssen ist.

Durch eine vorzugsweise geeignete Materialauswahl (Aluminium und dessen Legierungen, Magnesium und dessen Legierungen, Titan, Kohlenstofffaser-verstärkter Kunststoff, Verbundmaterialien und weitere Leichtbauwerkstoffe) führt die aktuelle Lösung ferner zu einer geringeren Masse des bewegten Systems.

Im Folgenden werden bevorzugte Ausführungsbeispiele unter Bezugnahme auf die beigefügten Zeichnungen näher erläutert.
- Fig. 1: zeigt schematisch die Produktübergabe mit Hilfe der Produktzuführvorrichtung, der Auffangbehälter und Verschlussklappen an die Produktempfangsvorrichtung. Hierbei werden in der Abbildung die einzelnen Schritte a) bis h) einer Produktausgabe dargestellt. Von jedem der Schritte wird eine Seitenansicht (Unterabbildungen a-1, b-1, c-1, d-1, e-1, f-1, g-1, h-1) sowie eine Schnittansicht (Unterabbildungen a-2, b-2, c-2, d-2, e-2, f-2, g-2, h-2) dargestellt.
- Fig. 2: zeigt ein Schema der Stellungen dreier Antriebe (zentraler Antrieb, Schwenkantrieb und Klappenantrieb) abhängig vom Drehwinkel. Hierbei zeigt Fig. 2 a) ein Schema aus dem Stand der Technik, und Fig. 2 b) zeigt ein Schema gemäß der vorliegenden Erfindung.
- Fig. 3: zeigt Teile der Produktausgabevorrichtung gemäß einer bevorzugten Ausführungsform mit einer Kurvenscheibe, welche die Bewegung der Verschlussklappen steuert, zusätzlich eine Auswurfvorrichtung beinhaltend. In Fig. 3 sind insbesondere die Auffangbehälter mit Verschlussklappen sowie die Komponenten der Antriebe gezeigt.
- Fig. 4: zeigt Teile der Produktausgabevorrichtung gemäß einer weiteren bevorzugten Ausführungsform mit einem Kardangelenk, welches die Bewegung der Verschlussklappen steuert, zusätzlich eine Auswurfvorrichtung beinhaltend. In Fig. 4 sind ebenfalls die Auffangbehälter mit Verschlussklappen sowie die Komponenten der Antriebe gezeigt.
- Fig. 5: zeigt schematisch die Kopplung der Antriebe (zentraler Antrieb, Klappenantrieb und Schwenkantrieb, sowie optional Zusatzantrieb für eine Auswurfvorrichtung).
- Fig. 6: zeigt den Aufbau des Schwenkantriebes, welcher in der vorliegenden Ausführungsform als Stillstandsgetriebe ausgeführt ist.
- Fig. 7: zeigt eine Verfahrkurve des Stillstandgetriebes im Punkt P aus Fig. 6.

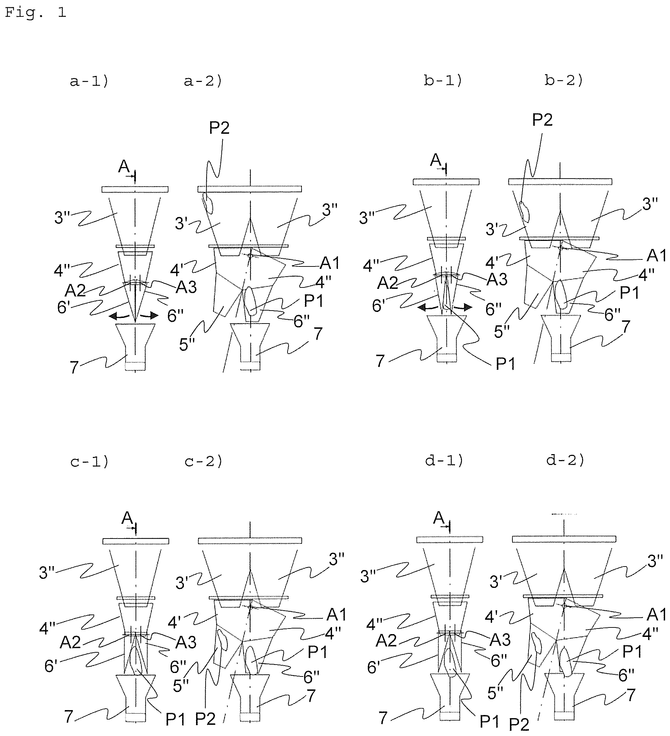

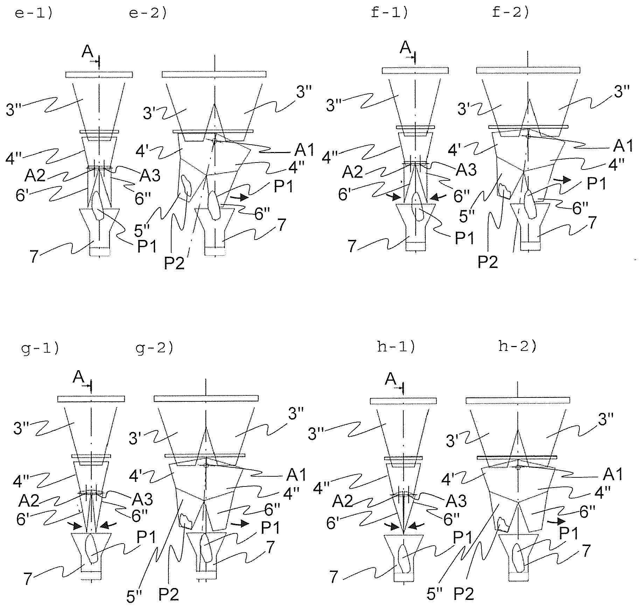

Fig. 1 zeigt den Ablauf einer Produktausgabe aus einer Produktausgabevorrichtung 1 mit der Produktausgabe von Produktmengen P1 und P2. Es ist jeweils eine Seitenansicht und eine Schnittansicht der Baugruppe bestehend aus Produktzuführvorrichtungen 3', 3", Auffangbehältern 4',4" sowie Verschlussklappen 5', 5" bzw. 6', 6" dargestellt. Ebenfalls wird verdeutlicht, dass die Schwenkbewegung der Auffangbehälter 4',4" senkrecht zur Öffnungs-/Schließrichtung der Verschlussklappen 5', 5" bzw. 6', 6" ist, da eine Schwenkachse A1 senkrecht zu Verschlussklappenachsen A2 und A3 der Verschlussklappen 6', 6" sowie der Verschlussklappenachsen A4 und A5 (in Fig. 1 nicht gezeigt) der Verschlussklappen 5', 5" steht. Die Verschlussklappen 5', 5" sowie 6', 6" bewegen sich nach außen und oben in Richtung des Auffangbehälters 4' bzw. 4", wenn sie sich öffnen. Dabei ist die Öffnungsrichtung senkrecht zur Schwenkrichtung.

Hierbei zeigt Fig. 1 a) einen Zustand, in welchem sich der zweite Auffangbehälter 4" zentral über der Öffnung der Produktempfangsvorrichtung 7 befindet. Eine Produktmenge P1 befindet sich bereits innerhalb der zweiten Verschlussklappen 6', 6" des zweiten Auffangbehälters 4". Die zweiten Verschlussklappen 6', 6" befinden sich im geschlossenen Zustand. Weiter oben in der ersten Produktzuführvorrichtung 3' befindet sich an der Wand eine zweite Produktmenge P2, welche an der Wand hinuntergleitet.

In Fig. 1 b) wird ein Zustand gezeigt, in welchem sich die zweiten Verschlussklappen 6', 6" des zweiten Auffangbehälters 4" öffnen. An der Schwenkposition des ersten Auffangbehälters 4' und zweiten Auffangbehälters 4" hat sich gegenüber Fig. 1 a) nichts verändert. Die Produktmenge P2 hat sich jedoch innerhalb der ersten Produktzuführvorrichtung 3' an deren Wand entlang weiter nach unten bewegt, hat aber noch nicht den ersten Auffangbehälter 4' erreicht.

In Fig. 1 c) sind die zweiten Verschlussklappen 6', 6" vollständig geöffnet, so dass sich die Produktmenge P1 aus dem zweiten Auffangbehälter 4" zur Produktempfangsvorrichtung 7 bewegen kann. Die zweite Produktmenge P2 hat sich ebenfalls weiter nach unten im ersten Auffangbehälter 4' bewegt. Am Schwenkzustand des ersten Auffangbehälters 4' und zweiten Auffangbehälters 4" hat sich jedoch nichts geändert.

In Fig. 1 d) hat sich die Produktmenge P1 weiter nach unten bewegt und befindet schon zum Teil in der Produktempfangsvorrichtung 7.

In Fig. 1 e) hat die erste Produktmenge P1 den Bereich der zweiten Verschlussklappen 6', 6" schon nahezu verlassen. Der Schwenkvorgang beginnt, während die zweiten Verschlussklappen 6', 6" des zweiten Auffangbehälters 4" noch immer geöffnet sind.

In Fig. 1 f) hat bereits der Schwenkvorgang des ersten Auffangbehälters 4' und des zweiten Auffangbehälters 4" begonnen. Hierbei ist zu beachten, dass die zweiten Verschlussklappen 6', 6" des zweiten Auffangbehälters 4" gerade noch geöffnet sind, bevor sie anfangen, sich zu schließen, und die Produktmenge P1 sich noch im Abwurf in die Produktempfangsvorrichtung 7 befindet. Auf der anderen Seite ist die zweite Produktmenge P2 bereits komplett am Boden der ersten Verschlussklappen 5', 5" des ersten Auffangbehälters 4' angekommen.

In Fig. 1 g) hat sich der Schwenkvorgang weiter fortgesetzt, und der zweite Auffangbehälter 4" hat sich ein Stück weit weg von der Produktempfangsvorrichtung 7 wegbewegt. Die zweiten Verschlussklappen 6', 6" des zweiten Auffangbehälters 4" sind dabei, sich zu schließen. Die Produktmenge P1 ist bereits vollständig in der Produktempfangsvorrichtung 7 angekommen, während sich die zweite Produktmenge P2 weiterhin am Boden der ersten Verschlussklappen 5', 5" des ersten Auffangbehälters 4' befindet.

In Fig. 1 h) hat sich die Schwenkbewegung des ersten Auffangbehälters 4' und des zweiten Auffangbehälters 4" weiter fortgesetzt. Dabei bewegt sich der erste Auffangbehälter 4' mit dessen ersten Verschlussklappen 5', 5" immer weiter in Richtung Öffnung der Produktempfangsvorrichtung 7 zu. Die zweiten Verschlussklappen 6', 6" des zweiten Auffangbehälters 4" sind nun vollständig geschlossen. Die Produktmenge P1 ist in der Produktempfangsvorrichtung 7 weiter nach unten gefallen, hinsichtlich der Position der Produktmenge P2 hat sich nichts geändert.

In Fig. 1 wird deutlich ersichtlich, dass der Schwenkvorgang des ersten Auffangbehälters 4' und des zweiten Auffangbehälters 4" bereits beginnt, bevor in diesem Fall die zweiten Verschlussklappen 6', 6" des zweiten Auffangbehälters 4" begonnen haben, sich zu schließen.

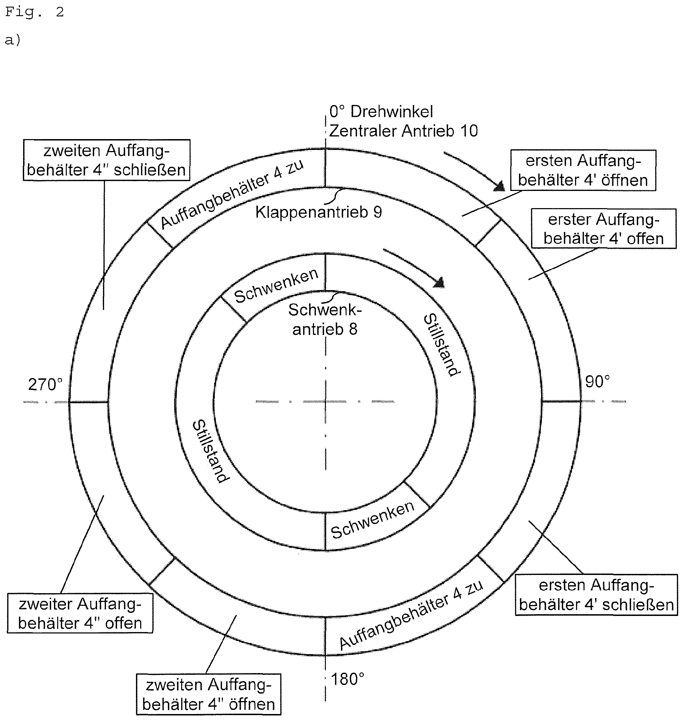

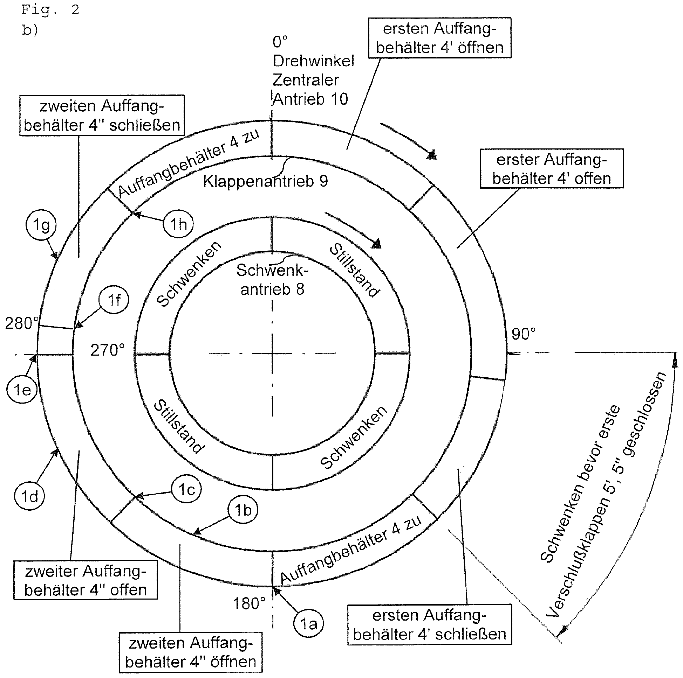

Fig. 2 zeigt eine Zusammenschau der einzelnen Zustände eines Schwenkantriebs 8 und eines Klappenantriebs 9 bei sich veränderndem Drehwinkel eines zentralen Antriebs 10 aus dem Stand der Technik sowie gemäß einer erfindungsgemäßen Lösung.
Fig. 2 a) beschreibt hier den Stand der Technik (EP 0 979 393 B1). Zwischen 0° und ungefähr 45° Drehwinkel des zentralen Antriebs 10 steht der Schwenkantrieb still, während sich die ersten Verschlussklappen 5', 5" des ersten Auffangbehälters 4' öffnen. Die vollständige Öffnung ist ungefähr bei einem Drehwinkel des zentralen Antriebs 10 von ca. 45° erreicht. Bei weiterer Drehung des zentralen Antriebs 10 steht der Schwenkantrieb 8 weiterhin still, und die ersten Verschlussklappen 5', 5" des ersten Auffangbehälters 4' befinden sich in geöffnetem Zustand. Dies ist bis zum Erreichen eines Drehwinkels des zentralen Antriebs 10 von 90° der Fall. Bei einem Drehwinkel des zentralen Antriebs 10 größer als 90° beginnen sich die ersten Verschlussklappen 5', 5" des ersten Auffangbehälters 4' zu schließen, der Schwenkantrieb 8 befindet sich weiterhin im Stillstand. Erst bei ungefähr 135° Drehwinkel des zentralen Antriebs 10 ist das Schließen der ersten Verschlussklappen 5', 5" des ersten Auffangbehälters 4' beendet. Bei einem Zustand größer 135° Drehwinkel des zentralen Antriebs 10 beginnt der Schwenkantrieb 8 mit dem Schwenken der Auffangbehälter 4', 4". Die ersten Verschlussklappen 5', 5" des ersten Auffangbehälters 4' befinden sich ab diesem Zeitpunkt in geschlossenem Zustand. Das Schwenken erfolgt bis zu einem Drehwinkel des zentralen Antriebs 10 von 180°. Bei diesem Drehwinkel von 180° hört die Schwenkbewegung des Schwenkantriebes 8 auf, der Schwenkantrieb 9 befindet sich hier wieder im Zustand des Stillstands. Bei einem Drehwinkel des zentralen Antriebs 10 von größer 180° beginnen sich die zweiten Verschlussklappen 6', 6" des zweiten Auffangbehälters 4" zu öffnen, dies geschieht weiterhin bis zu einem Drehwinkel des zentralen Antriebs 10 von ungefähr 225°. Der Schwenkantrieb 8 befindet sich in diesem Bereich im Stillstand. Zwischen einem Drehwinkel von ungefähr 225° und 270° befinden sich die zweiten Verschlussklappen 6', 6" des zweiten Auffangbehälters 4" im offenen Zustand, der Schwenkantrieb 8 befindet sich weiterhin im Stillstand. Ab einem Drehwinkel des zentralen Antriebs 10 von 270° beginnen sich die zweiten Verschlussklappen 6', 6" des zweiten Auffangbehälters 4" zu schließen, die Schließbewegung ist bei einem Drehwinkel des zentralen Antriebs 10 von ungefähr 315° beendet, der Schwenkantrieb 8 befindet sich weiterhin im Stillstand. Ab einem Drehwinkel von ungefähr 315° des zentralen Antriebs 10 sind die zweiten Verschlussklappen 6', 6" des zweiten Auffangbehälters geschlossen, und eine Schwenkbewegung des Schwenkantriebs findet statt. Diese ist beim Erreichen eines Drehwinkels von 360° des zentralen Antriebs 10 (entspricht 0°) beendet.

Fig. 2 b) zeigt ein Schema einer bevorzugten Ausführungsform Hier sind ebenfalls die Zustände a)- h) aus Fig. 1 dargestellt.

Bei einem Drehwinkel von 0° des zentralen Antriebs 10 befindet sich der Schwenkantrieb 8 im Stillstand, während der Klappenantrieb 9 damit beginnt, die ersten Verschlussklappen 5', 5" des ersten Auffangbehälters 4' zu öffnen. Ab einem Drehwinkel von ungefähr 45° des zentralen Antriebs 10 sind die ersten Verschlussklappen 5', 5" des ersten Auffangbehälters 4' geöffnet. Dieser Zustand wird bis zu einem Drehwinkel des zentralen Antriebs 10 von 90° beibehalten. Ab diesem Drehwinkel des zentralen Antriebs 10 beginnt bereits der Schwenkantrieb 8 mit einem Schwenken der Auffangbehälter 4', 4". Die ersten Verschlussklappen 5', 5" des ersten Auffangbehälters 4' bleiben jedoch noch bis zu einem Winkel von ca. 100° geöffnet. Ab einem Drehwinkel des zentralen Antriebs 10 von ca. 100° beginnen sich die ersten Verschlussklappen 5', 5" des ersten Auffangbehälters 4' zu schließen, das Schließen ist bei einem Drehwinkel des zentralen Antriebs von 135° abgeschlossen. Das Schwenken des Schwenkantriebs 8 schreitet noch bis zu einem Drehwinkel des zentralen Antriebs 10 von 180° fort, während die Behälterklappen ab einem Drehwinkel des zentralen Antriebs 10 von 135° geschlossen sind und bis zu einem Drehwinkel des zentralen Antriebs 10 von 180° geschlossen bleiben. Bei einem Drehwinkel des zentralen Antriebs zwischen 180° und 270° befindet sich der Schwenkantrieb 8 wieder im Stillstand. Zwischen einem Drehwinkel des zentralen Antriebs 10 von 180° und 225° öffnen sich die zweiten Verschlussklappen 6', 6" des zweiten Auffangbehälters 4". Bei einem Drehwinkel des zentralen Antriebs 10 zwischen 225° und 280° liegen die beiden Verschlussklappen 6', 6" des zweiten Auffangbehälters 4" in geöffnetem Zustand vor. Bei einem Drehwinkel des zentralen Antriebs 10 von über 280° beginnen sich die beiden Verschlussklappen 6', 6" des zweiten Auffangbehälters 4" zu schließen. Bereits ab einem Drehwinkel des zentralen Antriebs 10 von 270° beginnt der Schwenkantrieb 8 bereits mit einer Rückschwenkbewegung, welche bis zu einem Drehwinkel des zentralen Antriebs 10 von 360° (entspricht 0°) fortschreitet. Die zweiten Verschlussklappen 6', 6" des zweiten Auffangbehälters 4" sind bei einem Drehwinkel des zentralen Antriebs 10 von 315° geschlossen, dieser Zustand hält bis zum Drehwinkel des zentralen Antriebs 10 von 360° (=0°) an. In Fig. 2 b) sind hinsichtlich des zweiten Auffangbehälters 4" sämtliche Zwischenzustände a) bis h) eingezeichnet, wie sie auch in Fig. 1 dargestellt sind.

Wie im Vergleich von Fig. 2 a) und Fig. 2 b) ersichtlich wird, sind die Phasen des Schwenkens bei der erfindungsgemäßen Lösung nach Fig. 1 b) deutlich ausgedehnt, diese nehmen hier jeweils ein Viertel des Drehwinkelbereichs des zentralen Antriebs 10 in Anspruch, während dies im Stand der Technik nach Fig. 1 a) nur jeweils 1/8 des Bereiches abdeckt.

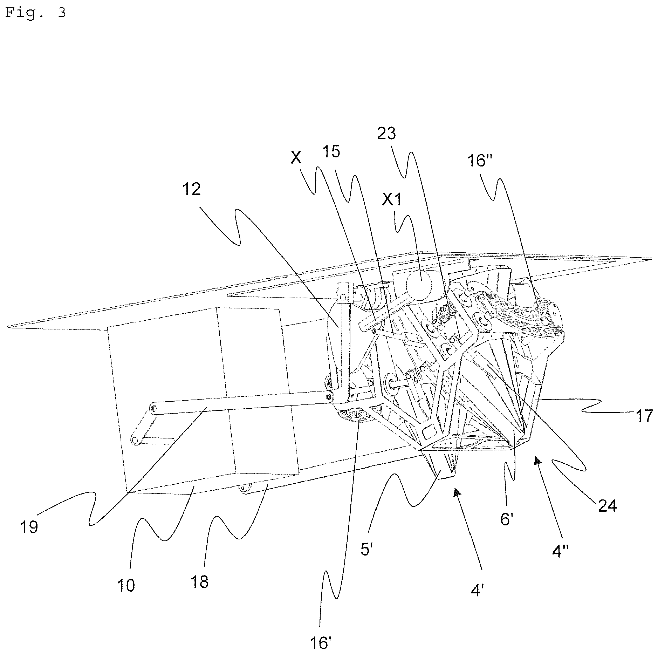

Fig. 3 zeigt eine erste Ausführungsform der Produktausgabevorrichtung, bei welcher der Klappenantrieb mit Hilfe einer Kurvenscheibe 12 ausgeführt ist. Die Kurvenscheibe 12 kann einen Hebel 15 zum Bewegen der zweiten Verschlussklappen 6', 6" führen und betätigen. Mit dem Hebel 15 zum Bewegen der zweiten Verschlussklappen 6', 6" ist eine Fachwerkkonstruktion 16" mechanisch verbunden, welche die Kraft bzw. Bewegung zum Öffnen und Schließen der zweiten Verschlussklappen 6', 6" weitergibt. Zur Unterstützung des Öffnens und Schließens der Verschlussklappen 6', 6" ist ferner jeweils eine Torsionsfeder 23 vorgesehen, welche eine gewisse Vorspannkraft aufbringt, um die zweiten Verschlussklappen 6', 6" im geschlossenen Zustand (in der Kniehebelstellung) zu halten. Diese Torsionsfeder 23 bringt die Verschlussklappen 6', 6" auch vom geöffneten Zustand mit der entsprechenden Federkraft wieder in den geschlossenen Zustand zurück.
Die Krafteinleitung an die Verschlussklappen 6', 6" erfolgt nahe der jeweiligen Massenschwerpunkte durch entsprechende Verbindungselemente 24. Ferner beinhaltet die Produktausgabevorrichtung 1 eine Rahmenkonstruktion 17, welche den ersten Auffangbehälter 4' und den zweiten Auffangbehälter 4" inklusive deren Verschlussklappen 5', 5" bzw. 6', 6" aufnimmt. Hinsichtlich der Schwenkbewegung sind durch diese Rahmenkonstruktionen 17 der erste Auffangbehälter 4' und der zweite Auffangbehälter 4" mechanisch miteinander gekoppelt. Ferner ist aus Fig. 3 ersichtlich, dass sowohl ein Verbindungshebel 18 zur Verbindung des zentralen Antriebs 10 mit einem Teil des Schwenkantriebs 8 sowie ein Verbindungshebel 19 zur Verbindung des zentralen Antriebs 10 mit dem einem Teil des Klappenantriebs 9 vorhanden ist. In Fig. 3 ist weiterhin erkennbar, dass die Öffnungsrichtung der Verschlussklappen 5', 5" bzw. 6', 6" senkrecht zu der Schwenkrichtung des erste Auffangbehälters 4' und des zweite Auffangbehälter 4" ist.
Eine funktionsgleiche Betätigung existiert auch für die ersten Verschlussklappen 5', 5" (u.a. mit einem Hebel 14, in Fig. 3 nicht dargestellt).
Weiterhin ist in Fig. 3 noch ein Zusatzantrieb X1 für eine Auswurfvorrichtung X dargestellt. Die Auswurfvorrichtung X erlaubt es, den Auffangbehälter 4", welcher sich nicht über der Produktempfangsvorrichtung befindet, also seitlich weggeschwenkt und normalerweise geschlossen ist, in dieser Stellung zu öffnen, indem durch die Auswurfvorrichtung X der Hebel 15 zum Bewegen der zweiten Verschlussklappen 6', 6" ebenfalls betätigt werden kann. Dadurch kann Produkt, welches aus verschiedenen Gründen nicht in die Produktempfangsvorrichtung gehört, ausgeworfen werden, beispielsweise bei Überfüllungen oder Teilportionen die nicht in Kombinationen passen. Ferner existiert eine zweite Auswurfvorrichtung für den Auffangbehälter 4' (nicht in Fig. 3 gezeigt).

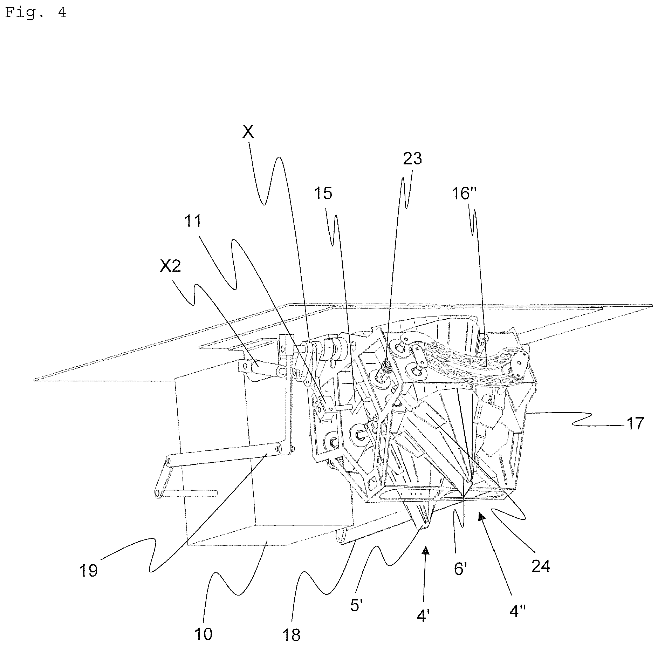

Fig. 4 zeigt eine zweite Ausführungsform der Produktausgabevorrichtung, wobei der Klappenantrieb mit Hilfe eines Kardangelenkes 11 realisiert ist. Sämtliche weiteren Bauteile entsprechen denen in Fig. 3. Ein Zusatzantrieb X2 für eine Auswurfvorrichtung X ist ebenfalls dargestellt, wobei die Auswurfvorrichtung X den Hebel 15 zum Bewegen der zweiten Verschlussklappen 6', 6' betätigen kann. Der baugleiche Hebel 14 zum Bewegen der ersten Verschlussklappen 5', 5" (in Fig. 4 nicht gezeigt) kann mit der bereits genannten zweiten Auswurfvorrichtung (ebenfalls nicht in Fig. 4 gezeigt) betätigt werden.

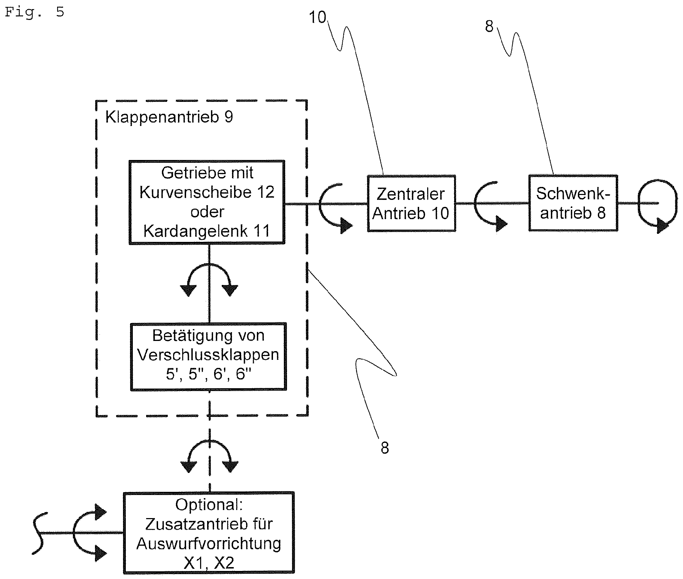

Fig. 5 zeigt ein Schema des Antriebs. Hieraus wird ersichtlich, dass an einen zentralen Antrieb 10 der Schwenkantrieb 8 mechanisch gekoppelt ist. Weiterhin ist an den zentralen Antrieb 10 der Klappenantrieb 9 mechanisch gekoppelt. Dieser kann, wie bereits oben beschrieben, entweder als Getriebe mit Kurvenscheibe oder als Kardangetriebe ausgeführt sein. An das Getriebe mit Kardangelenk 11 bzw. Kurvenscheibe 12 ist daher die Betätigung der Verschlussklappen 5', 5" bzw. 6',6" gekoppelt. Die Kombination der drei Antriebe (Schwenkantrieb 8, Klappenantrieb 9, zentraler Antrieb 10) dient also als Steuerungsvorrichtung 25 für die Schwenkbewegung der Auffangbehälter 4',4" sowie die Öffnung der Verschlussklappen 5', 5" bzw. 6', 6". Optional ist, dass am Klappenantrieb 9 mindestens einer der beiden Zusatzantriebe X1, X2 für eine etwaige Auswurfvorrichtung X angebracht werden kann.

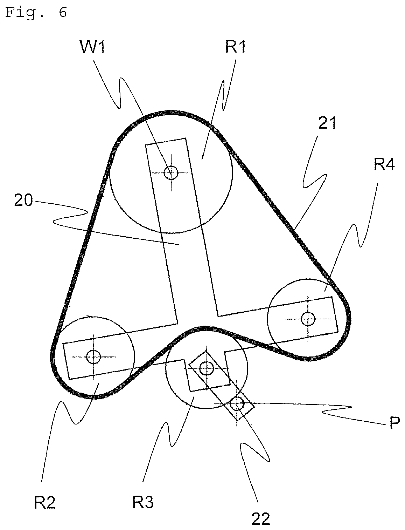

Fig. 6 zeigt das Stillstandsgetriebe 13, welches einen temporären Stillstand ohne Änderung der Drehrichtung bzw. der Drehzahl des zentralen Antriebs 10 ermöglicht. Dieses Stillstandsgetriebe 13, durch welches sich bei bestimmten Drehwinkelbereichen des zentralen Antriebs 10 die Auffangbehälter 4', 4" nicht in Bewegung befinden, erzeugt vorzugsweise eine nichtkreisförmige Bewegung im Punkt P.

Hierbei ist die Welle W1 des zentralen Antriebs 10 fest mit einer Basis 20 verbunden. Die Basis 20 ist in der Form eines Kreuzes ausgeführt. Durch die Drehung der Welle W1 des zentralen Antriebs 10 dreht sich die Basis 20 mit der Winkelgeschwindigkeit ω₁. An einem Ende der Basis 20 ist eine Rolle R1 angebracht, die allerdings fest mit dem Untergrund verbunden ist und sich somit nicht mit der Winkelgeschwindigkeit ω₁ dreht. Auf der Basis 20 sind ferner drei weitere Rollen R2, R3 und R4 angebracht, welche frei drehbar sind. Weiterhin ist die Rolle R3 zwischen den Rollen R2 und R4 etwas versetzt angebracht. Ferner ist ein Seil bzw. ein Riemen 21 um die Rollen R1, R2, R3 und R4 gespannt. An der Rolle R3 ist ein Hebel 22 angebracht, welcher fest mit der Rolle R3 verbunden ist. Der Hebel 22 dreht sich mit der Winkelgeschwindigkeit ω₄ und kann am Punkt P beispielsweise durch einen Hebel mit dem Schwenkantrieb 8 verbunden werden.

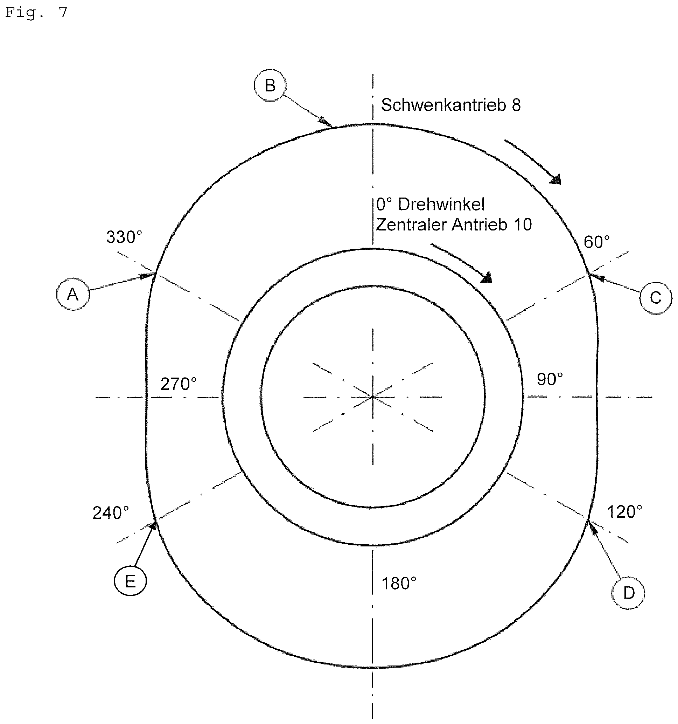

Fig. 7 zeigt eine Verfahrkurve des Stillstandsgetriebes 13 im äußersten Punkt P des Hebels 22 aus Fig. 6. Diese Verfahrkurve hat eine quasi-ovale Form und setzt sich aus zwei nahezu halbkreisförmigen und zwei im Wesentlichen geraden Segmenten zusammen. In den halbkreisförmigen Segmenten findet eine Bewegung des Schwenkantriebs 8 statt, während in den geraden Segmenten nahezu Stillstand des Schwenkantriebs 8 herrscht.
In einem Punkt A (hier bei ungefähr 330° des Drehwinkels des zentralen Antriebs 10) beginnt der Schwenkantrieb 8 zu schwenken. Das Schwenken dauert an (ebenfalls im Punkt B), bis ungefähr ein Punkt von 60° Drehwinkel des zentralen Antriebs 10 erreicht ist (Punkt C). Hier bleibt der Schwenkantrieb 8 still stehen, wobei sich der zentrale Antrieb 10 weiterdrehen kann. Erst bei Erreichen eines Drehwinkels von 120° des zentralen Antriebs 10 (Punkt D) beginnt sich das Stillstandsgetriebe 13 wieder zu drehen und den Schwenkantrieb 8 anzutreiben. Bei Erreichen eines Drehwinkels von 240° des zentralen Antriebs 10 (Punkt E) bleibt der Schwenkantrieb wieder stehen, und beginnt sich erst bei Wiedererreichen des Punktes A wieder zu bewegen.

So kann erreicht werden, dass sich der zentrale Antrieb 10 immer drehen kann und dabei auch gleichzeitig den Schwenkantrieb 8 und den Klappenantrieb 9 antreiben kann, wobei eine Bewegung des Schwenkantriebs 8 jeweils nur zu festgelegten Zeitspannen erfolgt.

In der vorliegenden Erfindung sind vorzugsweise weiterhin alle Lager, welche zur Lagerung von allen Achsen und Wellen benötigt werden, als Kugellager ausgebildet. Zur Reduktion von Gewicht können sämtliche Achsen als Hohlachsen ausgeführt sein. Weiterhin können zur Unterstützung der Schließbewegung der ersten Verschlussklappen 5', 5" und zweiten Verschlussklappen 6', 6" Schenkelfedern mit einstellbarer Vorspannung eingebaut werden, um die Schließbewegung zu unterstützen.

Ferner kann vorzugsweise eine Justage der Hebellängen des Antriebs der Verschlussklappen vermieden werden. Eine Klemmverbindung der Achse für die Behälterklappen gleicht dies aus.

Ferner führt vorzugsweise die Fachwerkkonstruktion der Verbindungshebel der Behälterklappen zu einer geringeren Masse, trotzdem aber höherer Steifigkeit. Die Ausbildung einer oder mehrerer Achsen als Hohlachsen trägt ebenfalls dazu bei.

Weiterhin führt vorzugsweise die Krafteinleitung zur Betätigung der Behälterklappen nahe des Massenschwerpunkts der Verschlussklappen zu geringeren Rückwirkungen im System. Dadurch kann ebenfalls eine höhere Steifigkeit der Blechkonstruktion der Verschlussklappen realisiert werden.

Ferner kann die Rahmenkonstruktion 17 in Kastenbauweise ausgeführt sein.

In einer vorteilhaften Ausgestaltung der Erfindung, wie in Fig. 3 und 4 gezeigt, können die ersten Verschlussklappen 5', 5" und zweiten Verschlussklappen 6', 6" in der Aufnahmestellung durch einen Zusatzantrieb geöffnet werden (X1 bzw. X2 in Fig. 3 und Fig. 4). X1 bzw. X2 wird benötigt, um Fehlauswürfe, die nicht in der Produktempfangsvorrichtung 7 abgeworfen werden sollen, seitlich (neben der Produktempfangsvorrichtung 7) abzuwerfen - also in jeder beliebigen Schwenkposition der Auffangbehälters 4', 4". Hierbei sind die Zusatzantriebe X1 bzw. X2 dazu angepasst, zusätzlich zur Kurvenscheibe 12 bzw. zum Kardangelenk 11 den Hebel 15 zum Bewegen der ersten Verschlussklappen 5', 5" zu bewegen. Mit einem baugleichen Zusatzantrieb wird der Hebel 14 zur Bewegung der zweiten Verschlussklappen 6', 6" bewegt.
Ferner kann eine Betätigungsachse des Klappenantriebes 9 durch eine Klemmverbindung mit einem System von Hebeln verbunden sein (u.a. Fachwerkkonstruktion 16, , Hebel 15 zum Bewegen der zweiten Verschlussklappen 6', 6", baugleicher Hebel 14 zum Bewegen der ersten Verschlussklappen 5', 5"), wodurch keine separaten Justageschritte der fertigungsbedingten Toleranzen benötigt werden und diese im Zuge der Klemmverbindung der Betätigungsachse der Verschlussklappen 5', 5", 6', 6" ausgeglichen werden.

Ein solches System findet Anwendung in einem Wägesystem, insbesondere in einer Kombinationswaage.

Die vorliegende Erfindung ist nicht auf die oben genannten Ausführungsformen beschränkt.

Beispielsweise wäre es auch möglich, mehr als zwei Produktzuführungsvorrichtungen 3 und mehr als zwei Auffangbehälter 4 in der Produktausgabevorrichtung 1 vorzusehen.

Ferner ist die Anzahl der Verschlussklappen 5', 5", 6', 6" nicht auf jeweils zwei pro Auffangbehälter 4', 4" beschränkt. Es wäre auch ein System denkbar, in dem vier Verschlussklappen einen Verschluss eines Auffangbehälters 4', 4" bilden.

Weiterhin wäre es möglich, mehr als eine Produktempfangsvorrichtung 7 in der Produktausgabevorrichtung 1 vorzusehen.

Ferner wäre auch eine Produktausgabevorrichtung mit mehr als einem Kardangelenk 11 und mehr als einer Kurvenscheibe 12 denkbar.

Ebenfalls ist eine Lösung ohne das System von Antrieben denkbar. Es könnte auch jede anders aufgebaute Steuerungsvorrichtung 25 für die Schwenkbewegung der Auffangbehälter 4',4" sowie die Öffnung der Verschlussklappen 5', 5" bzw. 6', 6" zum Einsatz kommen.

Ferner wäre es möglich, dass sich die Verschlussklappen (5', 5"; 6', 6") durch Bewegung in Richtung der Auffangbehälter (4', 4") öffnen - diese würden somit nicht mehr in einer Schwenkbewegung geöffnet, sondern in entlang der Auffangbehälter (4', 4") nach oben gezogen.

Die vorliegende Erfindung umfasst eine Produktausgabevorrichtung für ein Produktbereitstellungssystem, in welcher eine erste Produktzuführvorrichtung 3' und eine zweite Produktzuführvorrichtung 3" Produktmengen in einem ersten Auffangbehälter 4' und einem zweiten Auffangbehälter 4" vorsehen. Beide Auffangbehälter sind jeweils mit ersten Verschlussklappen 5', 5" bzw. zweiten Verschlussklappen 6', 6" versehen. Sobald die Auffangbehälter 4', 4" über der Produktempfangsvorrichtung 7 positioniert sind, können sich die Verschlussklappen 5', 5" bzw. 6', 6" öffnen, um das Produkt in die Produktempfangsvorrichtung 7 fallenzulassen. Der Auffangbehälter 4, beinhaltend den ersten Auffangbehälter 4' und den zweiten Auffangbehälter 4", kann zu einer Ausgabestellung des ersten Auffangbehälters 4', S', geschwenkt werden oder aber zu einer Ausgabestellung des zweiten Auffangbehälters 4", S". Hierbei beginnt die Schwenkbewegung hin zu jeweils anderen Ausgabestellungen (S' oder S"), bevor die Verschlussklappen (5', 5" bzw. 6', 6") sich geschlossen haben.

## Patentansprüche

1. Produktausgabevorrichtung (1) für ein Produktbereitstellungssystem (2), aufweisend
eine erste Produktzuführvorrichtung (3') mit einem zugehörigen ersten Auffangbehälter (4') und eine zweite Produktzuführvorrichtung (3") mit einem zweiten zugehörigen Auffangbehälter (4"), wobei die Auffangbehälter (4', 4") mechanisch miteinander gekoppelt sind und an ihrer Unterseite jeweils Verschlussklappen (5', 5"; 6', 6") aufweisen,
und dazu angepasst sind, über das Produktbereitstellungssystem (2) bereitgestellte Produktmengen (P) an eine Produktempfangsvorrichtung (7), die einen vorgegebenen Öffnungsquerschnitt aufweist, auszugeben, wobei die Auffangbehälter um eine Schwenkachse (A1) schwenkbar sind und wobei jeder Auffangbehälter (4', 4") zum Ausgeben einer bereitgestellten Produktmenge (P) in jeweils eine Ausgabestellung (S', S") bringbar ist, in der seine entsprechenden Verschlussklappen (5', 5"; 6', 6") im Wesentlichen mittig über dem Öffnungsquerschnitt der Produktempfangsvorrichtung (7) angeordnet sind,
**dadurch gekennzeichnet, dass** die Verschlussklappen (5', 5"; 6', 6") so ausgestaltet sind, dass sie durch ihre Öffnungsbewegung aus dem Schwenkpfad der Auffangbehälter (4', 4") bewegbar sind, wobei die Produktausgabevorrichtung (1) ferner eine Steuerungsvorrichtung (25) aufweist, die derart konfiguriert ist, dass das Schwenken von der Ausgabestellung (S' oder S") eines Auffangbehälters (4' oder 4") in die Ausgabestellung (S" oder S') des jeweils anderen Auffangbehälters (4" oder 4') beginnt, bevor sich die Verschlussklappen (5', 5" oder 6', 6") des seine Ausgabestellung (S' oder S") verlassenden Auffangbehälters (4' oder 4") geschlossen haben.

2. Produktausgabevorrichtung (1) gemäß Anspruch 1, wobei die Öffnungs- bzw. Schließrichtung der Verschlussklappen (5', 5"; 6', 6") um jeweilige Achsen (A2, A3 bzw. A4, A5) jeweils senkrecht zur Schwenkachse (A1) ist.

3. Produktausgabevorrichtung (1) gemäß Anspruch 2, wobei die Steuerungsvorrichtung (25) einen Schwenkantrieb (8), welcher dazu angepasst ist, die Auffangbehälter (4', 4") zu schwenken, und einen Klappenantrieb (9), welcher dazu angepasst ist, die Verschlussklappen (5', 5"; 6', 6") zu öffnen bzw. zu schließen, umfasst, wobei der Schwenkantrieb (8) und der Klappenantrieb (9) an einen zentralen Antrieb (10) der Produktausgabevorrichtung (1), vorzugsweise mechanisch gekoppelt sind.

4. Produktausgabevorrichtung (1) gemäß Anspruch 3, wobei der zentrale Antrieb (10) und der Klappenantrieb (9) über mindestens ein Kardangelenk (11) miteinander verbunden sind.

5. Produktausgabevorrichtung (1) gemäß Anspruch 3, wobei der zentrale Antrieb (10) und der Klappenantrieb (9) über mindestens eine Kurvenscheibe (12) miteinander verbunden sind.

6. Produktausgabevorrichtung (1) gemäß einem der Ansprüche 3 bis 5, wobei der Schwenkantrieb (8) als Stillstandsgetriebe (13) ausgeführt ist, durch welches sich bei bestimmten Drehwinkelbereichen die Auffangbehälter (4', 4") nicht in Bewegung befinden, wobei das Stillstandsgetriebe (13) vorzugsweise eine nichtkreisförmige Bewegung erzeugt.

7. Produktausgabevorrichtung (1) gemäß einem der Ansprüche 1 bis 6, zusätzlich mindestens eine Fachwerkkonstruktion (16) zur Bewegung der Verschlussklappen (5', 5"; 6', 6") der Auffangbehälter (4', 4") enthaltend.

8. Produktausgabevorrichtung (1) gemäß einem der Ansprüche 3 bis 5, wobei mindestens ein Zusatzantrieb (X1, X2) für eine Auswurfvorrichtung (X) mit dem Klappenantrieb (9) verbunden ist und der Zusatzantrieb (X1, X2) dazu angepasst ist, eine Bewegung der Verschlussklappen (5', 5"; 6', 6") in jeder gewünschten Schwenkposition der Auffangbehälter (4', 4") herbeizuführen.

9. Produktausgabevorrichtung (1) gemäß einem der Ansprüche 1 bis 7, welche dazu angepasst ist, dass die Kraft zur Betätigung der Verschlussklappen (5', 5"; 6', 6") der Auffangbehälter (4', 4") nahe des Masseschwerpunktes der Verschlussklappen (5', 5"; 6', 6") einleitbar ist.

10. Produktausgabevorrichtung (1) gemäß einem der Ansprüche 1 bis 8, ferner Torsionsfedern (23) mit einstellbarer Vorspannkraft aufweisend, welche dazu angepasst sind, die Schließbewegung der Verschlussklappen (5', 5"; 6', 6") der Auffangbehälter (4', 4") zu unterstützen.

11. Produktausgabevorrichtung (1) gemäß Anspruch 2, wobei mindestens eine der Achsen (A2, A3, A4, A5) als Hohlachse ausgeführt ist.

12. Vorrichtung mit einer Produktausgabevorrichtung (1) gemäß einem der Ansprüche 1 bis 10, und einem Wägesystem als Produktbereitstellungssystem (2).

13. Vorrichtung gemäß Anspruch 12, wobei das Wägesystem eine Kombinationswaage ist.

14. Verfahren zur Betätigung einer Produktausgabevorrichtung (1) für ein Produktbereitstellungssystem (2) gemäß einem der vorhergehenden Ansprüche, wobei das Schwenken von der Ausgabestellung (S' oder S") eines Auffangbehälters (4' oder 4") in die Ausgabestellung (S" oder S') des jeweils anderen Auffangbehälters (4" oder 4') beginnt, bevor sich die Verschlussklappen (5', 5" oder 6', 6") des seine Ausgabestellung (S' oder S") verlassenden Auffangbehälters (4' oder 4") geschlossen haben.

## Claims

1. Product output device (1) for a product supply system (2), comprising a first product supply device (3') with a respective first collecting container (4') and a second product supply device (3") with a second respective collecting container (4"), wherein the collecting containers (4', 4") are mechanically coupled and respectively comprise closure flaps (5', 5"; 6', 6") at their bottom side,
and are adapted to output product amounts (P) provided by the product supply system (2) to a product receiving device (7), which comprises a predetermined opening cross-section,
wherein the collecting containers are pivotable around a pivoting axis (A1), wherein each collecting container (4', 4") is bringable in respectively one output position (S', S") for outputting a provided product amount (P), in which its respective closure flaps (5', 5"; 6', 6") are basically aligned in the middle above the opening cross-section of the product receiving device (7),
**characterized in that** the closure flaps (5', 5"; 6', 6") are designed such that they are movable out of the pivoting path of the collecting containers (4', 4") by their opening movement, wherein the product output device (1) further comprises a control device (25), which is configured such that pivoting from the output position (S', S") of one collecting container (4' or 4") into the output position (S" or S') of the other collecting container (4" or 4) begins before the closure flaps (5', 5" or 6', 6") of the collecting container (4', 4") which is leaving its output position (S" or S') have closed.

2. Product output device (1) according to claim 1, wherein the opening or the closing direction of the closure flaps (5', 5"; 6', 6") around respective axes (A2, A3 or A4, A5) is respectively perpendicular to the pivoting axis (A1).

3. Product output device (1) according to claim 2, wherein the control device (25) comprises a pivoting drive (8), which is adapted to pivot the collecting containers (4', 4"), and a flap drive (9) which is adapted to open or close the closure flaps (5', 5"; 6', 6"), wherein the pivoting drive (8) and the flap drive (9) are coupled preferably mechanically to a central drive (10).

4. Product output device (1) according to claim 3, wherein the central drive (10) and the flap drive (9) are connected with each other via at least one cardan joint (11).

5. Product output device (1) according to claim 3, wherein the central drive (10) and the flap drive (9) are connected to each other via at least one cam disk (12).

6. Product output device (1) according to one of claims 3 to 5, wherein the pivoting drive (8) is designed as a standstill drive (13), by which the collecting containers (4', 4") are not moving in certain rotation angle ranges, wherein the standstill drive (13) preferably generates a noncircular movement.

7. Product output device (1) according to one of claims 1 to 6, additionally containing at least one framework structure construction (16) for movement of the closure flaps (5', 5"; 6', 6") of the collecting containers (4', 4").

8. Product output device (1) according to one of claims 3 to 5, wherein at least one additional drive (X1, X2) for an ejection device (X) is connected to the flap drive (9), and the additional drive (X1, X2) is adapted to cause a movement of the closure flaps (5', 5"; 6', 6") in each desired pivoting positions of the collecting containers (4', 4").

9. Product output device (1) according to one of claims 1 to 7, which is adapted to introduce the force for the actuation of the closure flaps (5', 5"; 6', 6") of the collecting containers (4', 4") close to the center of gravity of the closure flaps (5', 5"; 6', 6").

10. Product output device (1) according to one of claims 1 to 8, further comprising torsion springs (23) with adjustable pre-tension, which are adapted to support the closing movement of the closure flaps (5', 5"; 6', 6") of the collecting containers (4' 4").

11. Product output device (1) according to claim 2, wherein at least one of the axes (A2, A3, A4, A5) is designed as hollow axis.

12. Device with a product output device (1) according to one of claims 1 to 10 and a scale system as product supply device (2).

13. Device according to claim 12, wherein the scale system is a combination scale.

14. Process for the actuation of a product output device (1) for a product supply system (2) according to one of the previous claims, wherein the pivoting from one output position (S', S") of a collecting containers (4' or 4") into the output position (S", S') of the respectively other collecting container (4" or 4" begins before the closure flaps (5', 5" or 6', 6") of the collecting container (4' or 4") leaving its output position (S' or S") have closed.

## Revendications

1. Dispositif de sortie de produit (1) pour un système de mise à disposition de produit (2), présentant
un premier dispositif d'alimentation de produit (3') avec un premier récipient collecteur (4') afférent et un second dispositif d'alimentation de produit (3") avec un second récipient collecteur (4") afférent, dans lequel les récipients collecteurs (4', 4") sont couplés mécaniquement l'un à l'autre et présentent sur leur côté inférieur respectivement des clapets de fermeture (5', 5" ; 6', 6"),
et sont adaptés afin de sortir des quantités de produit (P) mises à disposition par le biais du système de mise à disposition de produit (2) à un dispositif de réception de produit (7) qui présente une section transversale d'ouverture prédéfinie, dans lequel les récipients collecteurs sont pivotants autour d'un axe de pivotement (A1) et dans lequel chaque récipient collecteur (4', 4") peut être amené pour la sortie d'une quantité de produit (P) mise à disposition dans respectivement une position de sortie (S', S"), dans laquelle ses clapets de fermeture (5', 5" ; 6', 6") correspondants sont disposés sensiblement au milieu au-dessus de la section transversale d'ouverture du dispositif de réception de produit (7),
**caractérisé en ce que** les clapets de fermeture (5', 5" ; 6', 6") sont configurés de sorte qu'ils puissent être déplacés par leur mouvement d'ouverture de la voie de pivotement des récipients collecteurs (4', 4"), dans lequel le dispositif de sortie de produit (1) présente de plus un dispositif de commande (25) qui est configuré de telle manière que le pivotement de la position de sortie (S' ou S") d'un récipient collecteur (4' ou 4") dans la position de sortie (S" ou S') de l'autre récipient collecteur (4" ou 4') respectivement commence avant que les clapets de fermeture (5', 5" ou 6', 6") du récipient collecteur (4' ou 4") quittant sa position de sortie (S' ou S") n'aient fermé.

2. Dispositif de sortie de produit (1) selon la revendication 1,
dans lequel le sens d'ouverture ou de fermeture des clapets de fermeture (5', 5"; 6', 6") est autour d'axes respectifs (A2, A3 ou A4, A5) qui sont perpendiculaires à l'axe de pivotement (A1).

3. Dispositif de sortie de produit (1) selon la revendication 2, dans lequel le dispositif de commande (25) comporte un entraînement pivotant (8) qui est adapté afin de pivoter les récipients collecteurs (4', 4"), et un entraînement de clapet (9) qui est adapté afin d'ouvrir ou de fermer les clapets de fermeture (5', 5" ; 6', 6"), dans lequel l'entraînement pivotant (8) et l'entraînement de clapet (9) sont couplés de préférence mécaniquement à un entraînement central (10) du dispositif de sortie de produit (1).

4. Dispositif de sortie de produit (1) selon la revendication 3, dans lequel l'entraînement central (10) et l'entraînement de clapet (9) sont raccordés l'un à l'autre par le biais d'au moins une articulation de Cardan (11).

5. Dispositif de sortie de produit (1) selon la revendication 3, dans lequel l'entraînement central (10) et l'entraînement de clapet (9) sont raccordés l'un à l'autre par le biais d'au moins un disque à came (12).

6. Dispositif de sortie de produit (1) selon l'une quelconque des revendications 3 à 5, dans lequel l'entraînement pivotant (8) est réalisé en tant qu'engrenage d'arrêt (13) par lequel en cas de plages d'angle de rotation déterminées les récipients collecteurs (4', 4") ne se trouvent pas en mouvement, dans lequel l'engrenage d'arrêt (13) génère de préférence un mouvement non circulaire.

7. Dispositif de sortie de produit (1) selon l'une quelconque des revendications 1 à 6, contenant en outre au moins une construction en treillis (16) pour le mouvement des clapets de fermeture (5', 5" ; 6', 6") des récipients collecteurs (4', 4").

8. Dispositif de sortie de produit (1) selon l'une quelconque des revendications 3 à 5, dans lequel au moins un entraînement supplémentaire (X1, X2) pour un dispositif d'éjection (X) est raccordé à l'entraînement de clapet (9) et l'entraînement supplémentaire (X1, X2) est adapté afin d'entraîner un mouvement des clapets de fermeture (5', 5" ; 6', 6") dans chaque position de pivotement souhaitée des récipients collecteurs (4', 4").

9. Dispositif de sortie de produit (1) selon l'une quelconque des revendications 1 à 7, qui est adapté afin que la force pour l'actionnement des clapets de fermeture (5', 5" ; 6', 6") des récipients collecteurs (4', 4") puisse être introduite près du centre de gravité massique des clapets de fermeture (5', 5" ; 6', 6").

10. Dispositif de sortie de produit (1) selon l'une quelconque des revendications 1 à 8, présentant de plus des ressorts de torsion (23) avec une force de précontrainte réglable qui sont adaptés afin de soutenir le mouvement de fermeture des clapets de fermeture (5', 5" ; 6', 6") des récipients collecteurs (4', 4").

11. Dispositif de sortie de produit (1) selon la revendication 2, dans lequel au moins un des axes (A2, A3, A4, A5) est réalisé en tant qu'axe creux.

12. Dispositif avec un dispositif de sortie de produit (1) selon l'une quelconque des revendications 1 à 10, et un système de pesée en tant que système de mise à disposition de produit (2).

13. Dispositif selon la revendication 12, dans lequel le système de pesée est une balance de combinaison.

14. Procédé d'actionnement d'un dispositif de sortie de produit (1) pour un système de mise à disposition de produit (2) selon l'une quelconque des revendications précédentes, dans lequel le pivotement de la position de sortie (S' ou S") d'un récipient collecteur (4' ou 4") dans la position de sortie (S" ou S') de l'autre récipient collecteur respectivement (4" ou 4') commence avant que les clapets de fermeture (5', 5" ou 6', 6") du récipient collecteur (4' ou 4") quittant sa position de sortie (S' ou S") n'aient fermé.
